# EUROPEAN PATENT APPLICATION

(11) **EP 4 375 178 A1**
(43) Date of publication of application: **29.05.2024**
(21) Application number: 22209424.5
(22) Date of filing: 24.11.2022
(51) Int. Cl.: B62K 27/12

(54) **A BIKE TRAILER AND A TOW BAR COMPRISING A TOWING VEHICLE CONNECTOR AND A BIKE TRAILER CONNECTOR**

(71) Applicant: Thule Sweden AB, 335 04 Hillerstorp (SE)
(72) Inventor: LINDHOLM, Olof, 33135 Värnamo (SE); Tjäderborn, Niclas, 55630 Jönköping (SE); Sandberg, Ida, 22274 Lund (SE)
(74) Representative: Wallentin, Lars

(57) **Abstract**

A towing vehicle connector (100) for connecting a tow bar (200) of a bike trailer to a towing vehicle, the tow bar (200) having a first end (202) associated with the bike trailer and wherein the towing vehicle connector (100) configured to be arranged between a second end (204) of the tow bar (200) opposite the first end (202) and the towing vehicle, wherein the towing vehicle connector (100) comprises a first portion (102) being configured to be arranged in a fixed position in relation to the vehicle and a second portion (104) configured to be arranged on the second end (204) of the tow bar (200) and releasably connected to the first portion (102), a tow bar (200) for forming a force conveying element between a towing vehicle and a bike trailer, and a bike trailer comprising a tow bar (200).

## Description

### TECHNICAL FIELD

The present disclosure relates to bike trailers, preferably to reconfigurable bike trailers which can be reconfigured from a bike trailer to different uses such as for running, skiing etc. The present disclosure more particularly relates to a towing vehicle connector, to a bike trailer connector, to a tow bar comprising a towing vehicle connector and/or a bike trailer connector, to a bike trailer comprising a tow bar and a to a method for connecting a tow bar to a towing vehicle.

### BACKGROUND OF THE INVENTION

Bike trailers for transporting cargo, pets and/or children are becoming increasingly popular as bicycles fill a larger part of our transportation needs. Using bicycles as a base for transportation is not only a smaller burden on the environment than relying on most other types of transportation such as by car, but may also in many scenarios such as in urban environments be more practical and often quicker.

Bike trailers expands the usability of the bicycle and can be used also with electrically assisted bikes allowing even higher loads to be towed. Many bike trailers are also reconfigurable between a trailer and for instance a stroller configuration, increasing the possible uses of the bike trailer. Moreover, many bike trailers can be fitted with skiing and/or running kits allowing the trailer to be either towed or pushed along by a user during such activities.

Manufacturers of bike trailers and of accessories for bike trailers constantly look for ways to improve the safety, usability and durability of their products. It is further desired to provide a way of reducing the complexity of connecting a bike trailer to a bicycle and vice versa and/or to simplify reconfiguring of a bike trailer.

### SUMMARY OF THE INVENTION

In view of the above, an object of the present invention is to provide a bike trailer which alleviates at least one of the drawbacks of the prior art. For example, an object of the teachings herein is to provide a towing vehicle connector facilitating connection of a tow bar to a towing vehicle. Moreover, it is an object of the teachings herein to provide a bike trailer connector facilitating connection of a tow bar to a bike trailer. A further object of the teachings herein is to provide a tow bar comprising a towing vehicle connector and/or a bike trailer connector facilitating connection of the tow bar to a bike trailer and/or to a towing vehicle. Another object of the teachings herein is to provide a method for connecting a tow bar to a towing vehicle.

In a first aspect of the present disclosure is a towing vehicle connector for connecting a tow bar of a bike trailer to a towing vehicle provided. The tow bar having a first end associated with the bike trailer and a second end opposite the first end being associated with the towing vehicle, wherein the towing vehicle connector is configured to be arranged between the second end of the tow bar and the towing vehicle. The towing vehicle connector comprises a first portion being configured to be arranged in a fixed position in relation to the vehicle and a second portion configured to be arranged on the second end of the tow bar and be releasably connected to the first portion, the second portion being configured to be rotatable in relation to the second end of the tow bar with at least two degrees of freedom. The first portion being arranged in a fixed position, i.e. for instance by being attached to the bicycle by means of the bicycle wheel axle nut, while the second portion is configured to be rotatable in relation to the second end of the tow bar facilitates connection of the connector to the vehicle as less movement of the bike trailer will be necessary to reach a connected position of the second portion in relation to the first portion.

The towing vehicle connector may comprise at least one connection status indicator indicating when the first portion and second portion are connected, thus reducing the risk of incomplete or unsecure connection of the second portion and the tow bar to the towing vehicle.

A first connection status indicator may comprise a reciprocally moveable element, the movement of the reciprocally moveable element being controlled by the relative position of the first portion and the second portion such that the reciprocally moveable element indicates when the second portion is in a connected position in relation to the first portion.

The towing vehicle connector may comprise a second connection status indicator, the second connection status indicator comprising an alignment interface which is configured to be aligned when the second portion is in a connected position in relation to the first portion and thus indicating when the first portion and the second portion are connected.

The towing vehicle connector may comprise a connection interface between the first portion and the second portion and a latch preventing movement of the second portion in relation to the first portion out of a connected position along a disconnection path when the first portion is connected to the second portion, and wherein the connection interface is configured to prevent movement of the second portion in relation to the first portion out of the connected position in all directions except along the disconnection path.

The latch may be connected to the reciprocally moveable element, thus forming a part of the first connection status indicator and thus a connection between the latch and the reciprocally moveable element such that the reciprocally moveable element indicates when the latch prevents movement out the connected position.

The towing vehicle connector may further comprise a connection release being configured to be actuatable to selectively release the latch such that the latch does not prevent movement of the second portion out of the connected position along the disconnection path.

The connection release may be configured to upon actuation be moveable in a direction being arranged at an angle in relation to a movement direction of the latch to selectively release the latch, enabling provision of a compact towing vehicle connector which is easy to use.

The connection release may be configured to engage an abutment surface associated with the latch thus generating a force moving the latch such that it is released, the abutment surface preferably being inclined i.e. arranged at an angle in relation to the movement direction of the latch.

In one or more embodiments, the towing vehicle connector further comprises a securing element configured to be releasably attached to the first portion when the second portion is in a connected position in relation to the first portion and wherein the securing element is configured to prevent movement of the second portion in relation to the first portion out of a connected position when releasably attached to the first portion. The securing element provides an additional level of safety as the towing vehicle connector cannot be released without firstly removing the securing element.

In one or more embodiments, the securing element forms part of a secondary safety arrangement configured to connect the tow bar to the first portion, the secondary safety arrangement further comprising a second securing element configured to connect the first portion to the vehicle. Accordingly, the risk of the tow bar becoming entirely detached from towing vehicle is reduced even in scenario of a failure of the towing vehicle connector.

The securing element may be configured to be releasably attached to the alignment interface when the second portion is in a connected position in relation to the first portion such that the securing element by being releasably attached to the alignment interface prevents the second portion from moving out of the connected position in relation to the first portion. The alignment interface accordingly indicates the connected position of the first and second portion and further serves an attachment for the securing element, as if it is not aligned the securing element cannot be attached to the first portion.

The towing vehicle connector may further comprise a resilient element at the second end of the tow bar and the second portion of the towing vehicle connector may be attached to the resilient element. The resilient element provides increased movement between the tow bar and the second portion as the resilient element can be bent for instance to facilitate connection/disconnection or when being subjected to forces arising when towing a bike trailer.

The second portion may be configured to be attached to the tow bar by means of a ball joint. The ball joint provides movement between the second portion and the tow bar with three rotational degrees of freedom, facilitating connection/disconnection of the second portion to the first portion and providing ease of use. The ball joint may form an attachment between the second portion and the tow bar which can only be released by disassembly of the second portion.

The second portion may be configured to automatically be releasably connected to the first portion when the second portion is arranged in a connected position in relation to the first portion. Accordingly, a user only have to bring the second portion to the connected position along the connection path whereby the second portion will automatically connect to the first portion without any further interaction from the user.

The second portion may be releasably connected to the first portion along a connection path having a component being arranged at an angle in relation to a lateral direction of the towing vehicle such that the second portion in a connected position is arranged below a fix point for fixating the first portion to the vehicle. Arranging the connected position below and preferably aligned in the travelling direction with the fix point reduces the risk of the first portion unintentionally rotating around the fix point due to a torque formed by the weight of the bike trailer acting through the tow bar on the towing vehicle connector.

A connection interface between the first portion and the second portion may comprise a protrusion and a corresponding recess for mutual engagement with each other to releasably connect the second portion to the first portion. The connection interface being configured such that the second portion is releasably connected to the first portion by a movement in relation to the first portion along a connection path having a component being arranged at an angle in relation to a protrusion direction of the protrusion. Typically, the second portion may be moved along the connection path in a engagement component thereof into the connected position in a direction being essentially perpendicular to the protrusion direction.

A distance between a connected position and a releasable position of the second portion in relation to the first portion may be less than a length of the protrusion, thus allowing for instance the connected position of the second portion to be arranged at a vertical distance below the fix point that is less than the length of the protrusion. This provides for a more compact towing vehicle connector and facilitates arranging the towing vehicle connector below the fix point.

The protrusion may comprise a central portion and the protrusion may further comprise at least one protruding shoulder configured to cooperate with a respective corresponding protruding shoulder in the recess.

The protrusion may comprise at least two protruding shoulders being distributed along a length of the protrusion, thus providing improved ability of towing vehicle connector to withstand forces, especially such that generate torque over the towing vehicle connector.

The second portion may comprise at least two contact surfaces for contacting the protrusion and forming relative movement limitations for the second portion in relation to the first portion in at least two movement directions parallel with a front surface of the first portion, wherein the at least two contact surfaces comprises contact sound reducing material properties. The contact surfaces may for instance be provided with a coating and/or be formed in a member of the second portion having the desired material properties. During use, the towing vehicle is subjected to a lot of vibrations and changes in towing forces, the risk of disturbing noises forming by repeated contact between the first portion and the second portion during such circumstances is accordingly reduced.

The second portion may comprise a first member and a second member being attached to one another, the first member comprising the recess and the second member being accessible through the recess, wherein the second member is provided with contact sound reducing material properties and wherein the at least two contact surfaces are formed in the second member.

In a second aspect is a bike trailer connector for connecting a tow bar to a bike trailer provided. The tow bar having a first end associated with the bike trailer and a second end associated with the towing vehicle and wherein the bike trailer connector is arranged on the first end of the tow bar. The bike trailer connector comprising a securing mechanism for securing the tow bar to the bike trailer, wherein the securing mechanism is configured to be automatically engaged when the tow bar is arranged in an inserted position in a tow bar opening of the bike trailer. Connection of the tow bar to the bike trailer is accordingly facilitated.

The securing mechanism may comprise an inclined abutment surface allowing a force generated by insertion of the tow bar into the tow bar opening to disengage the securing mechanism until the tow bar is in the inserted position in the tow bar opening whereby the securing mechanism automatically engages. The inclined abutment surface may in a preferred embodiment be arranged in the tow bar opening of the bike trailer. It is however also conceivable that that an inclined abutment surface may additionally or alternatively be provided on the bike trailer connector on the tow bar.

The securing mechanism may comprise a release push button associated with a securing pin for securing the tow bar to the bike trailer, the securing pin being actuatable by means of the push button to selectively release the tow bar from the inserted position in the tow bar opening.

The securing mechanism may comprise a securing pin and a second pin being operatively connected by an elongate element such that depression of the second pin causes depression of the securing pin and vice versa and wherein the elongate element is biased into an extended position of the securing pin and the second pin.

The bike trailer connector may further comprise an insertion stop surface being configured to only allow the tow bar to reach the inserted position in one orientation of the tow bar in relation to the bike trailer. As such, the risk of misuse and incorrect insertion of the tow bar in the bike trailer is reduced.

The insertion stop surface may be arranged at an angle in relation to an insertion direction of the tow bar.

The bike trailer connector may further comprise a locking mechanism configured to selectively prevent actuation of the securing mechanism at least when the tow bar is in the inserted position. The locking mechanism thus reducing the risk of unintentional removal of the tow bar from the bike trailer.

The locking mechanism of the bike trailer connector is configured to allow insertion of the tow bar to the inserted position into the tow bar opening when the locking mechanism is in a locked state. Accordingly, the locking mechanism may be arranged in the locked state when the tow bar is removed from the bike trailer, for instance by a biasing into the locked state. It will subsequently upon insertion into the tow bar opening be locked such that anyone who do not have access to a key or equivalent to operate the locking mechanism cannot release the securing mechanism and remove the tow bar from the bike trailer.

The locking mechanism may be configured to selectively prevent depression of the push button while not limiting the movement of the securing pin. It is thus not possible to actuate the securing pin by means of the push button, however it can still be depressed by for instance interaction with the inclined abutment surface upon insertion of the tow bar into the tow bar opening.

In a third aspect is a tow bar for forming a force conveying element between a towing vehicle and a bike trailer provided. The tow bar comprising a first end associated with the bike trailer and a second end associated with the towing vehicle. The tow bar further comprising a towing vehicle connector according to the first aspect arranged on the second end and/or a bike trailer connector according to the second aspect arranged on the first end.

In a fourth aspect is a bike trailer provided comprising a tow bar according to the third aspect.

In a fifth aspect is a method provided for connecting a towbar comprising a towing vehicle connector according to the first aspect to a towing vehicle. The method comprising:
- providing a towing vehicle having a first portion arranged thereon,
- moving the second portion of the towing vehicle connector of the tow bar in a connection path having a engagement component thereof forming the portion of the connection path closest to a connected position of the second portion in relation to the first portion, the engagement component being arranged at an angle between 60° and 120° in relation to a lateral towing vehicle direction and/or to a protrusion direction of a protrusion of a connection interface arranged between the first portion and the second portion.

The method may further comprise the second portion of the towing vehicle connector automatically releasably connecting to the first portion of the towing vehicle connector when brought into the connected position in relation to the first portion.

The method may further comprise moving the second portion to a connected position of the second portion in relation to the first portion being arranged below a fix point for fixating the first portion to the vehicle.

The method may further comprise releasably attaching a securing element to the first portion when the second portion is in the connected position in relation to the first portion.

The object is achieved by the subject-matter of the independent claims. Advantageous embodiments may be found in the dependent claims and in the accompanying description and drawings.

### BRIEF DESCRIPTION OF THE DRAWINGS

With reference to the appended drawings, below follows a more detailed description of embodiments of the invention cited as examples.

In the drawings:
Fig. 1 discloses a perspective view of tow bar comprising a towing vehicle connector.
Fig. 2 discloses a detail perspective view of a towing vehicle connector.
Fig. 3 discloses a perspective view of a connection interface between a first portion and a second portion of a towing vehicle connector.
Fig. 4. discloses a towing direction view of a towing vehicle connector.
Fig. 5 discloses a perspective view of a towing vehicle connector illustrating a connection interface thereof.
Fig. 6 discloses a perspective view of a towing vehicle connector with a second portion thereof in a connected position in relation to a first portion thereof.
Fig. 7 discloses a perspective view of a towing vehicle connector with a second portion thereof in a releasable position in relation to a first portion thereof.
Fig. 8 discloses a cross-sectioned view of a towing vehicle connector in plane parallel with the lateral direction.
Fig. 9 discloses a perspective view of a towing vehicle connector.
Fig. 10 discloses a perspective view of a towing vehicle with a first portion of a towing vehicle connector attached thereto.
Fig. 11 discloses a perspective view of a tightening member.
Fig. 12 discloses as a perspective view of a second portion of a towing vehicle connector.
Fig. 13 discloses as a perspective view of a second portion of a towing vehicle connector.
Fig. 14a discloses a first portion of a towing vehicle connector.
Fig. 14b discloses a first portion of a towing vehicle connector.
Fig. 14c discloses a second portion of a towing vehicle connector.
Fig. 15 discloses a schematic flowchart of a method for connecting a towbar comprising a towing vehicle connector to a towing vehicle.
Fig. 16 discloses a perspective view of a bike trailer comprising a tow bar comprising a bike trailer connector.
Fig. 17 discloses a perspective view of a bike trailer comprising a tow bar comprising a bike trailer connector.
Fig. 18 discloses a detail perspective view of a bike trailer connector.
Fig. 19 discloses a detail perspective view of a bike trailer connector.
Fig. 20 discloses a perspective view of a securing mechanism of a bike trailer connector.
Fig. 21 discloses a securing mechanism of a bike trailer connector.
Fig. 22 discloses a tow bar comprising a bike trailer connector.
Fig. 23 discloses a perspective view of a tow bar comprising a towing vehicle connector and a bike trailer connector.
Fig. 24 discloses a perspective view of a bike trailer and a tow bar comprising a towing vehicle connector and a bike trailer connector.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

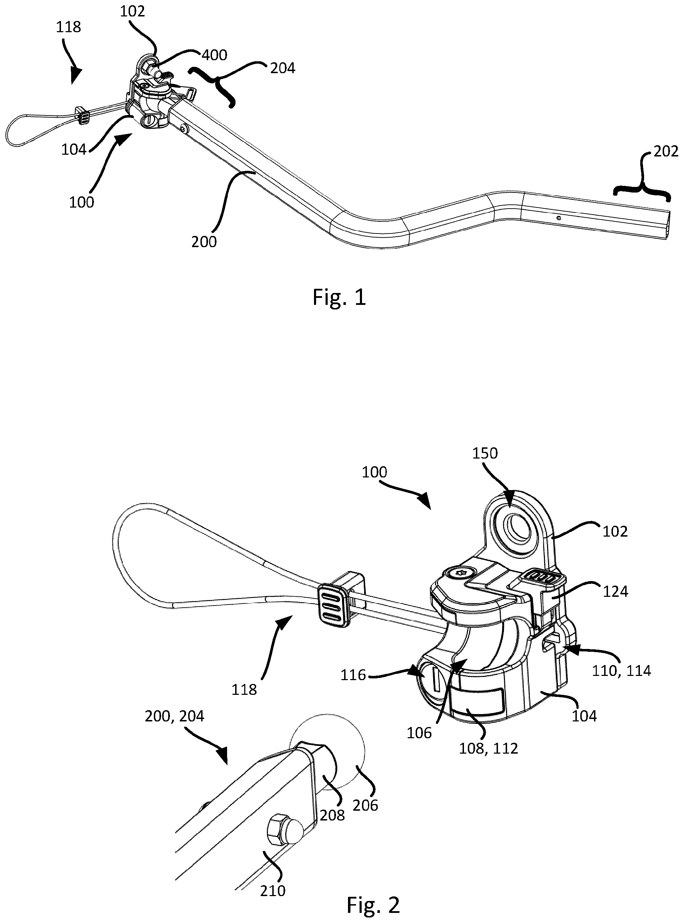

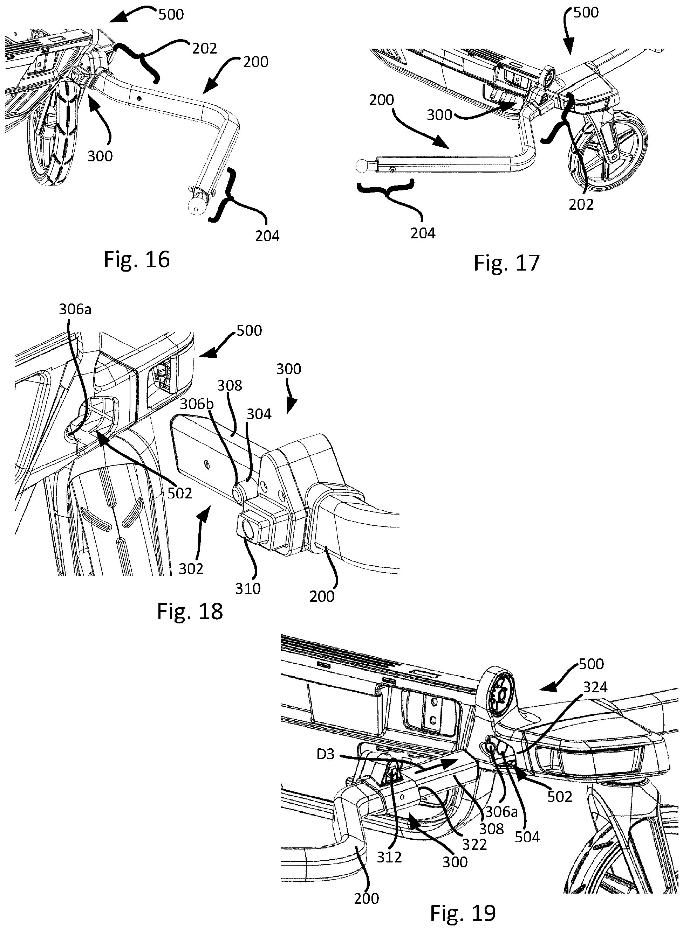

Figure 1 discloses a towing vehicle connector 100, tow bar 200 and a towing vehicle 400 attachment. The tow bar 200 is configured to form a force conveying element between the towing vehicle 400 and a bike trailer 500 (shown e.g. in Figure 16). The towing vehicle 400 in the context of the present disclosure is to be interpreted as a bicycle, an electrically assisted bicycle, or an electrically powered bicycle. Further, the towing vehicle 400 may be a tricycle, for instance a cargo bike having two front wheels and one rear wheel or vice versa.

The tow bar 200 preferably has an arm portion 210 (shown in Figure 2). The arm portion 210 may be made from a metallic material such as aluminum. It is also conceivable that the arm portion 210 is manufactured from a plastic and/or a composite material. The tow bar 200 comprises a first end 202 being intended to be associated with the bike trailer 500. The first end 202 may in one or more embodiments disclosed herein be attached to the bike trailer 500 such that it can be released or pivoted in relation to the bike trailer 500, thus allowing the bike trailer 500 to be converted for instance for use as a stroller.

The tow bar 200 further comprises a second end 204 being opposite to the first end 202 and which is associated with the towing vehicle 400. The second end 204 of the tow bar 200 is connected the towing vehicle connector 100 configured to be arranged between the second end 204 of the tow bar 200 and the towing vehicle 400. The towing vehicle connector 100 thus forms the connection between the tow bar 200 and the towing vehicle 400.

The towing vehicle connector 100 comprises a first portion 102 being configured to be arranged in a fixed position in relation to the vehicle 400. The first portion 102 may for instance be attached to the towing vehicle 400 by means of the wheel axle nut thereof as shown in Figure 1, thus holding the first portion 102 in a fixed position in relation to the towing vehicle 400. The first portion 102 may for the purpose of maintaining a fixed position be provided with ribs or similar protrusions (not shown) on the side thereof which is in engagement with the towing vehicle, in order to improve the friction between the first portion 102 and the towing vehicle 400. It is also considered that the first portion 102 may be integrally formed with the towing vehicle 400.

The towing vehicle connector 100 further comprises a second portion 104 configured to be arranged on the second end 204 of the tow bar 200. The second portion 104 is configured to be releasably connected to the first portion 102 for attaching the tow bar 200 to the towing vehicle 400. The second portion 104 is configured to be rotatable in relation to the second end 204 of the tow bar 200 with at least two degrees of freedom around its attachment point with the second end 204 of the tow bar. Accordingly, attachment of the second portion 104 to the first portion 102 is facilitated while it is provided for that the forces in various directions transferred from the tow bar 200 to the towing vehicle 400 and vice versa during towing of the bike trailer 500 can be absorbed.

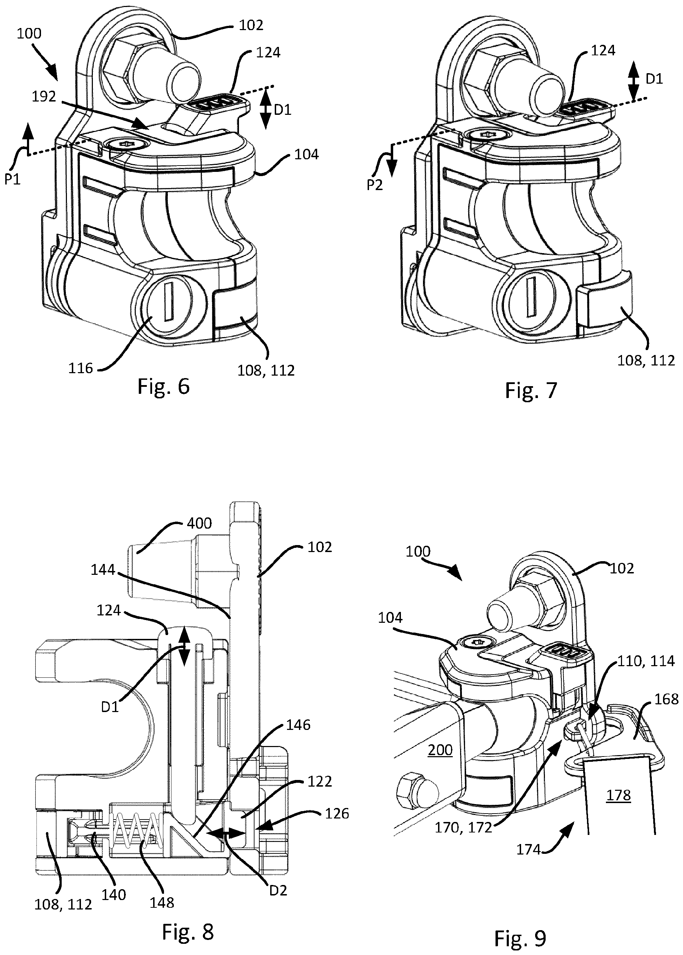

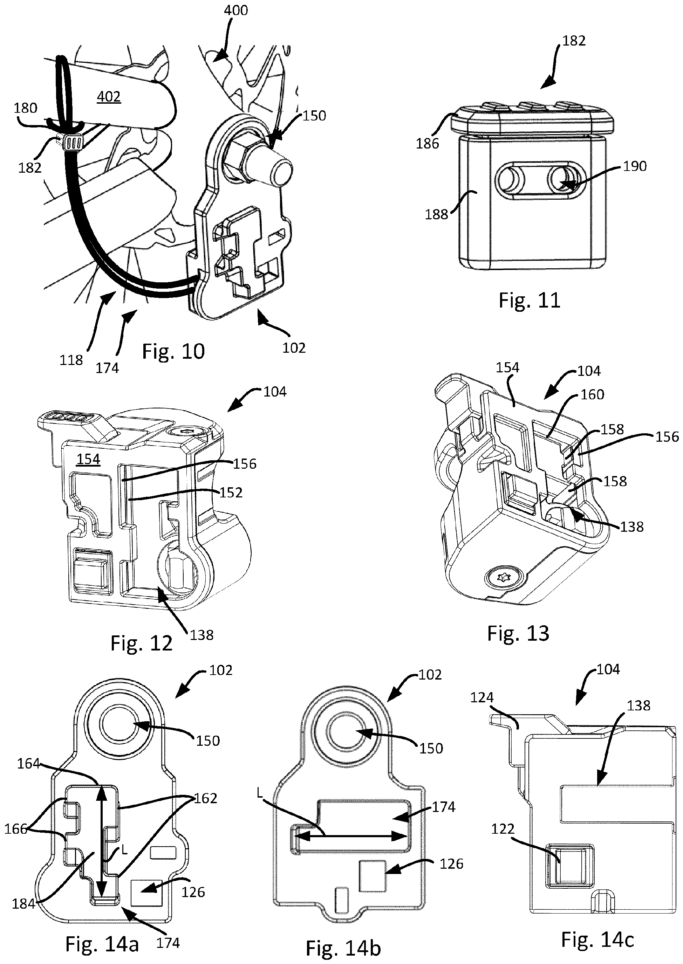

The towing vehicle connector 100 may further, as is illustrated in Figure 1, be provided with a second securing element 118, which will be elaborated further on in conjunction with Figures 9 and 10.

Figure 2 shows a perspective view of the second end 204 of the tow bar 200, with the towing vehicle connector 100 separated therefrom. As is illustrated, the towing vehicle connector 100 may be configured to be attached to the tow bar 200 by means of a ball joint, thus providing three rotational degrees of freedom in the joint between the tow bar 200 and the second portion 104. Accordingly, the second portion 104 may be provided with a recess or socket 106 having a spherical shape and being configured to accommodate a correspondingly spherically shaped ball 206 arranged on the tow bar 200. Preferably, the recess 106 is formed such that the ball 206 cannot be removed therefrom unless the second portion 104 is disassembled.

The tow bar 200 may further comprise a resilient element 208 at the second end 204 of the tow bar 200 to which the second portion 104 of the towing vehicle connector 100 is configured to be attached. The resilient member 208 may be formed from a rubber or a plastic / polymeric material having a resilient properties such that the resilient member 208 upon being exerted to a force may flex and thus facilitate absorption of forces between the tow bar 200 and the towing vehicle 400 as well as connection/disconnection of the towing vehicle connector 100. As is shown, the second portion 104 of the towing vehicle connector 100 is attached to the resilient element 208 and the ball 208 may further be formed integrally with the resilient element 208.

Further illustrated in Figure 2 is that the towing vehicle connector 100 may be provided with a first connection status indicator 108 for indicating when the first and second portion 102, 104 are connected, i.e. when the second portion 104 is in connected position in relation to the first portion 102 as is shown in Figure 2. A second connection status indicator 110 may further also be provided, the second status indicator 110 being a visual status indicator for determining correct alignment of the first and second portion 102, 104.

The towing vehicle connector 100 may further comprise a connection release 124, the connection release 124 being actuatable by a user to allow the second portion 104 to be released from the first portion 102. Moreover, the towing vehicle connector 100 may comprise a lock 116 for selective locking the first and second portion 102, 104 in the connected state.

The first portion 150 may as is illustrated in Figure 2 further be provided with a fix point 150 for attaching the first portion to the towing vehicle 400, the fix point 150 may be formed by an opening for instance for the rear wheel axle of the towing vehicle 400.

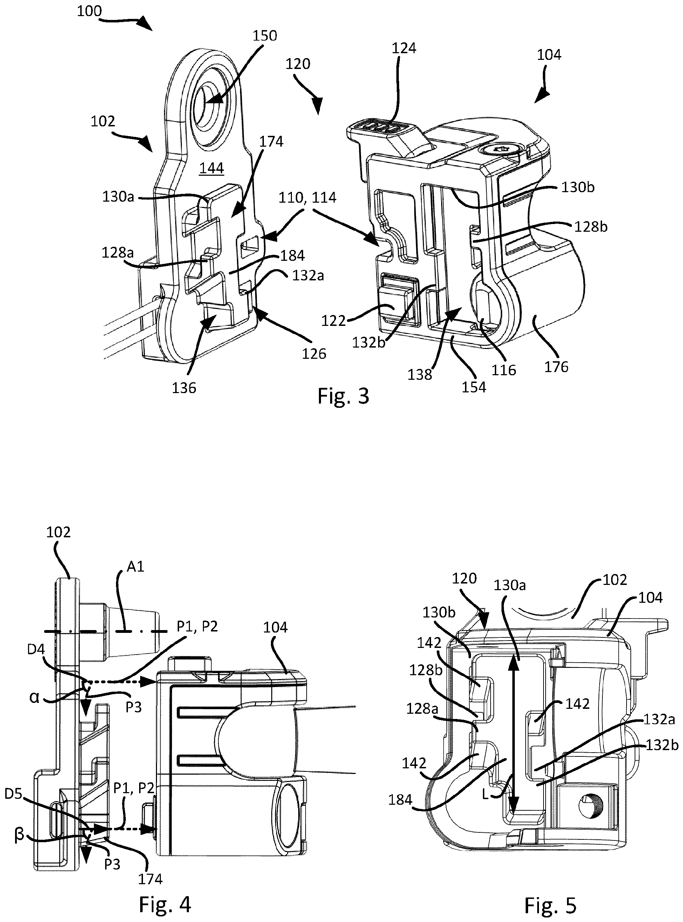

The towing vehicle connector 100 is preferably configured such that the connected position of the second portion 104 in relation to the first portion 102 is below the fix point 150. In one preferred embodiment, the second portion 104 is arranged in the connected position such that the recess 106 for the ball 206 is arranged aligned and vertically below the fix point 150 such that torque formed around the fix point 150 on the first portion 102 and/or around a rear wheel rotation axis A1 (shown in Fig. 4) of the towing vehicle 400 by a vertical force applied by the tow bar 200 to the towing vehicle connector 100 is reduced or entirely prevented.

Figure 3 shows a view of a perspective view of a connection interface 120 between the first portion 102 and the second portion 104. The connection interface 120 comprises a protrusion 174 and a corresponding recess 138 for mutual engagement with each other to releasably connect the second portion 104 to the first portion 102. Preferably, the recess 138 is formed in the second portion 104 and the protrusion 174 is formed in the first portion 102, however the opposite relationship is also considered.

The second portion 104 may comprise a first member 154 and a second member 176 being attached to one another. The first member 154 and the second member 176 are preferably separatable by removing one or more fasteners for instance one or more screws holding the first and second members 154, 176 together. When the second member 176 is removed from the first member 154, the ball recess 106 is opened up so that that the second portion 100 can be attached/removed to/from the tow bar 200.

The recess 138 may be formed in the first member 154, for instance as a through-hole therethrough through which the second member 176 is accessible. The first member 154 may be made from a different material than that of the second member 176. For instance, the first member 154 may be made from a metallic material such as aluminium, zinc or stainless steel while the second member 176 may be made from a plastic material or a composite material. The second member 176 may be made from a glass fiber reinforced polyamide, having between 20% and 40% glass fiber, preferably approximately 30%. Such a material provides desired contact sound reducing properties while also having sufficient strength and durability.

The connection interface 120 is configured for connection of the second portion 104 to the first portion 102, and thus the tow bar 200 to the towing vehicle 400, along the connection path P2 (shown in Figure 4) having an engagement component P3 being arranged at an angle β in relation to a protrusion direction D5 (shown in Figure 4) of the protrusion 174 and/or at an angle α to a lateral direction D4. A component is to be interpreted as a portion of the connection path P2 or of a disconnection path P1 respectively. The engagement component P3 is to be interpreted as the portion of the connection path P2 and disconnection path P1 between the connected position (shown in Figure 6) of the second portion 104 and a releasable position (shown in Figure 7) of the second portion 104, the releasable position defining where engagement of the connection interface 120 between the first and second portions 102, 104 along the disconnection and connection paths P1, P2 stops/starts. In the embodiment shown in Figure 4, the angles α and β are equal as the protrusion direction D5 is parallel with the lateral direction D4. It is however considered that the protrusion direction D5 may be arranged in a non-parallel direction in relation to the lateral direction D4 whereby the angles α and β would vary accordingly.

The protrusion direction D5 may as is shown be essentially parallel with the lateral direction D4 of the towing vehicle 400. The lateral direction is to be interpreted as a direction essentially perpendicular to a vertical direction and essentially perpendicular to a travelling direction of the towing vehicle 400. The lateral direction is preferably parallel with a rear wheel rotation axis A1 of the towing vehicle 400. The vertical direction of the vehicle may change as the towing vehicle is leaning, for instance during turning or when the towing vehicle is resting on a side stand. As such, the lateral direction is not at all times necessarily parallel with a horizontal direction.

The connection interface 120 may be configured such that an engagement component P3 of the connection path P2 is arranged at an angle α between 60° and 120° in relation to the lateral towing vehicle direction D4. Preferably, the angle α is approximately 90°.

The connection interface 120 may be configured such that an engagement component P3 of the connection path P2 is arranged at an angle β between 60° and 120° in relation to the protrusion direction D5. Preferably, the angle β is approximately 90°.

The engagement component P3 may be essentially parallel with a front surface 144 of the first portion 102. The front surface 102 is the surface surrounding the protrusion 174 on the first portion 102 and is perpendicular to the protrusion direction D5.

As is illustrated in Figures 3, 4 and 5, the connection interface 120 preferably comprises a protrusion 174 arranged on the first portion 102 and a recess 138 arranged on the second portion 104. Figure 4 shows the towing vehicle connector 100 further illustrating the connection path P2 and the disconnection path P1. Figure 5 shows a perspective view of the towing vehicle connector 100 with the second member 176 of the towing vehicle connector 100 being removed for illustrating the connection interface 120.

Preferably, the first portion 102 is passive and comprises no moving parts. As such, it will be less sensitive to wear if it is left on the towing vehicle 400 for extended periods of time and subjected to weather and road grime. The first portion 102 may be manufactured from a metallic material such as aluminium, stainless steel or zinc. Other materials are however equally applicable, such as plastic and/or composite materials.

The protrusion 174 may comprise a central portion 184 and at least one protruding shoulder 128a, 130a, 132a configured to cooperate with a respective corresponding protruding shoulder 128b, 130b, 132b in the recess 138. The cooperation between the shoulders 128a, 130a, 132a on the protrusion 174 and the shoulders 128b, 130b, 132b in the recess 138 forms a limit for the movement along the connection path P2 and thus defines the connected position of the second portion 104 in relation to the first portion 102. Moreover, when the second portion 104 is in the connected position, the shoulders 128a, 130a, 132a, 128b, 130b, 132b prevents movement of the second portion 104 away from the front surface 144 of the first portion 102 at each respective engagement. Each shoulder 128a, 130a, 132a, on the protrusion 174 having a hook-like or undercut shape allowing the respective shoulder 128b, 130b, 132b in the recess 138 to be arranged in between the respective shoulder 128a, 130a, 132a, on the protrusion 174 and the front surface 144 of the first portion 102.

The protrusion 174 may as is illustrated comprise at least two protruding shoulders 128a, 130a, 132a being distributed along a length L of the protrusion 174.

In one embodiment, an upper shoulder 130a is provided which is intended to cooperate with a corresponding upper shoulder 130b in the recess 138. The upper shoulder 130a on the protrusion 174 forms a protruding lip with extension across a width of the protrusion 174 and protruding therefrom in parallel with the front surface 144 of the first portion 102. The upper shoulder 130b in the recess 138 is formed by the upper edge being undercut and thus configured to accommodate the upper shoulder 130a of the protrusion 174. A left shoulder 128a and a right shoulder 132a may further be provided on the protrusion 174 being distributed along the length L thereof, preferably such that at least one of the left and right should 128a, 132a is arranged on the lengthwise opposite end of the protrusion 174 in relation to the upper shoulder 130a. A left and right shoulder 128b, 132b being provided correspondingly in the recess.

The protrusion 174 may further be provided with a plurality of inclined surfaces 142, each being configured to guide the movement of the second portion 104 along the disconnection path P1 and connection path P2 out of/into the releasable position. When the second portion 104 is moved along the connection path P2, the second portion 104 will make contact with one or more inclined surfaces 142 whereby it will gradually move into engagement of the engagement interface 120 as it moved towards the first portion 102.

The connection interface 120 may further comprise a latch 122 preventing movement of the second portion 104 in relation to the first portion 102 out of the connected position along a disconnection path P1 (shown in Figures 4 and 6) when the first portion 102 is connected to the second portion 104. The connection interface 120 is configured to prevent movement of the second portion 104 in relation to the first portion 102 out of the connected position in all directions except along the disconnection path P1, particularly along the engagement component P3 thereof.

The disconnection path P1, specifically the engagement component P3 thereof, may be directed in a direction in which it is less likely that high forces arise during use of the towing vehicle connector 100. In

Normally, high loads and forces are generated during acceleration and braking whereby positive/negative forces in the travelling/towing direction are generated and by loading forward of the wheel axles on the bike trailer such that a downwardly directed force is generated on the towing vehicle connector 100. As such, the disconnection path P1, i.e. the engagement component P3 thereof, is preferably arranged in an upwardly vertical direction whereby the latch 122 only have to withstand and prevent movement in the direction which is the least likely to be subjected to large forces.

The latch 122 is configured to be arranged in a latch recess 126 when the second portion 104 is in the connected position in relation to the first portion 102, thus preventing movement of the second portion 104 along the disconnection path P1. The latch recess 126 may be formed as a through hole in the first portion 102.

In embodiments herein in which the second portion 104 is provided with a lock 116, the lock 116 may be configured to engage with a locking recess 136 in the protrusion 174 when in a locked position, thus preventing movement of the second portion 104 along the disconnection path P1 regardless of if the latch 122 is arranged in the latch recess 126.

It is to be understood that the disconnection path P1 and the connection path P2 preferably coincide but have oppositely directed movement directions of the second portion 104 in relation to the first portion 102. Accordingly, definitions made in relation to the disconnection path P2 apply also to the connection path P1 in the opposite direction.

In the embodiment illustrated in Figure 4, the engagement component P3 is vertically directed such that the second portion 104 is moved vertically in relation to the first portion 102 during this phase of the connection path P2 and disconnection path P1.

However, it is also considered that the engagement component P3 may be arranged in other directions. For instance, the engagement component P3 may be arranged such that the second portion 104 is moved in any direction between a travelling/towing direction and the vertical direction through the engagement component P3 phase of the disconnection and connection paths P1, P2. As such, the connection interface 120 may be arranged rotated in the plane of the front surface 144 from what is shown in Figure 3 on the first and second portion 102, 104, thus allowing arrangement of the engagement component P3 e.g. in the travelling/towing direction or in any suitable direction for the application at hand.

A distance between the connected position and the releasable position, i.e. the length of the engagement component P3, of the second portion 104 in relation to the first portion 102 may be less than a length L of the protrusion 174. This is especially beneficial in the embodiment in which the connected position of the second portion 104 is arranged below the fix point 150 of the first portion, as the total length of the first portion 102 can be reduced. As is shown in Figure 4, the second portion 104 may be moved along the connection path P2 in a lateral direction D4, or in any non-obstructed direction that is comfortable, below the axle nut of the towing vehicle 400 and with significant vertical overlap between the protrusion 174 and the second portion 104. The protrusion 174 will guide the lateral movement until the second portion 104 reaches the releasable position shown in Figure 7, whereafter the second portion 104 can be moved along the engagement component P3. Naturally, the opposite is true for movement along the disconnection path P1. The overlap of the connection interface 120 and short length of the engagement component P3 provides for a compact towing vehicle connector 100 that can be arranged close to for instance a wheel axle nut on the towing vehicle 400.

Figures 6 and 7 illustrates the towing vehicle connector 100 with the second portion 104 in the connected position and in the releasable connection, i.e. along the engagement component P3, respectively. As illustrated, the second portion 104 may be provided with a connection release 124 being configured to be actuatable to selectively release the latch 122 such that the latch 122 does not prevent movement of the second portion 104 out of the connected position along the disconnection path P1. The connection release 124 is preferably formed as a push button that is maneuverable by a user by using a onehanded grip around the second portion 104.

The second portion 104 may as is shown in Figure 6 be provided with an accommodating recess 192 on an upwardly facing surface thereof, the accommodating recess 192 being aligned with the fix point 150 such that when the second portion 104 is moved along the disconnection path P1 it can move further in an upwardly vertical direction without making contact with the towing vehicle 400, specifically the wheel axle nut thereof. Accordingly, the engagement component P3 of the connection path P2 can be made longer and thus also the overlap between each shoulder 128a, 130a, 132a on the protrusion 174 and each shoulder 128b, 130b, 132b in the recess 138, without having to make the first portion 102 larger/longer. It is to be understood, as mentioned, that the second portion 104 is moved along the engagement component P3 in the disconnection direction when being moved along the disconnection path P1.

The latch 122 is during movement along the engagement component P3 along the connection path P2 configured to be pressed inwards by it making contact with the front surface 144 of the first portion 102 until it resiliently engages into the latch recess 126, whereby the second portion 104 is automatically connected to the first portion 102 and held in the connected position by the latch 122 and the connection interface 120. In order to move the second portion 104 out of the connected position along the disconnection path P1, the latch 122 must first be brought out of engagement with the latch recess 126.

Figure 7 illustrates how the first status indicator 108 is indicating when the second portion 104 is positioned along the engagement component P3 and not in the connected position. A reciprocally moveable element 112 is moved such that it protrudes outside of surrounding surfaces on the second portion 104, whereby a user can clearly see that that the second portion 104 is not in the connected position. A contrasting color may be provided to the reciprocally moveable element 112 that becomes visible when protruding as shown in Figure 7, for instance the sides thereof may be provided with a red color indicating a warning to the user when visible. When the second portion 104 is in the connected position, the reciprocally moveable element 112 is biased into the position shown in Figure 6 where it is more or less flush with the surrounding surfaces on the second portion 104. In this position, the contrasting color is not clearly visible.

The movement of the reciprocally moveable element 112 is thus controlled by the relative position of the first portion 102 and the second portion 104 such that the reciprocally moveable element 112 indicates when the second portion 104 is in a connected position in relation to the first portion 102.

This is further illustrated in Figure 8, where a cross sectioned view of the towing vehicle connector 100 illustrating the first status indicator 108 and the latch 122 / connection release 124. The second portion 104 is in the connected position in relation to the first portion 104, thus is the latch 122 arranged in the latch recess 126. A biasing element 148, such as a spring, may be provided which biases the latch 122 into the extended position shown in Figure 8.

As is illustrated, the latch 122 may be connected to the reciprocally moveable element 112 of the first status indicator 108. An connecting element 140 may thus be provided extending between the latch 122 and the reciprocally moveable element 112.

What is further shown in Figure 8 is that the connection release 124 is configured to upon actuation be moveable in a direction D1 which is essentially vertically disposed. This is beneficial since the associated towing vehicle 400, typically a bicycle, is generally less susceptible to be affected by the provision of a vertical force on a towing vehicle connector 100 in comparison to for instance a laterally directed force. This is because the lever arm around the ground contact of the towing vehicle is smaller for a certain force provided in the vertical direction in comparison with the same force provided in the lateral direction D4. The risk of unintentional tipping over of the towing vehicle 400 during this process is accordingly reduced and it is made easier for a user to actuate the connection release 124.

It is however also considered that the connection release actuation direction D1 may be arranged in any direction being arranged perpendicular to the lateral direction D4, for instance in a travelling/towing direction.

As is shown Figure 8, the movement direction D1 of the connection release 124 is arranged at an angle in relation to a movement direction D2 of the latch 122. The angle between the movement direction D1 of the connection release 124 and the movement direction D2 of the latch 122 may be perpendicular as is illustrated in Figure 8.

The connection release 124 is configured to engage an abutment surface 146 associated with the latch 122 thus generating a force moving the latch 122 such that it is released. The abutment surface 146 is oriented such that a force pushing the connection release 124 toward the latch 122 generates a force on the latch 122 urging it in the movement direction D2 out of engagement with the latch recess 126. The opposite relationship is naturally also true, a biasing force on the latch 122 into its extended position provides a lifting force on the connection release 124 in the movement direction D1 into the extended position of the connection release 124.

A biasing element 148, such as a coil spring, may be provided biasing the latch 122 into its extended position. By the aforementioned arrangement with the latch 122 operatively connected to the reciprocally movable element 112 of the first status indicator 108 as well as to the connection release 124, one biasing element 148 is sufficient for controlling the position of all three components.

In Figure 9 is a perspective view of the towing vehicle connector 100 shown, illustrating the second status indicator 110. As mentioned, the second status indicator comprises an alignment interface 114 which is configured to be aligned when the second portion 104 is in the connected position in relation to the first portion 102. The alignment interface 114 may comprise an opening 170 in the first portion 102 and a recess 172 in the second portion 104, which are aligned with one another when the second portion 104 is in the connected position.

Further, the towing vehicle connector 100 may comprises a securing element 168 which is configured to be releasably attached to the first portion 102 when the second portion 104 is connected to the first portion 102. The securing element 168, which may be formed as a hook or a carabiner style shackle, is configured to prevent movement of the second portion 104 in relation to the first portion 102 out of the connected position when releasably attached to the first portion 102. The securing element 168 is configured to be releasably attached to the alignment interface 114 when the second portion 104 is connected to the first portion 102 such that the securing element 168 by being releasably attached to the alignment interface 114 prevents the second portion 104 from moving out of the connected position in relation to the first portion 102. The securing element 168 may be configured to extend through the opening 170 in the first portion 102 and through the recess 172 in the second portion when releasably attached thereto, thus preventing disconnection of the towing vehicle connector 100.

The securing element 168 may form part of a secondary safety arrangement 174 configured to connect the tow bar 200 to the first portion 102. As shown, the secondary safety arrangement 174 may comprise a strap 178 at one end attached to the securing element 168 and at the other end attached to the tow bar 200. The strap 178 and the securing element 168 thus forms a connection between the tow bar 200 and the first portion 102, which provides additional safety in the case that connection between the first portion 102 and second portion 104 fails for some reason, whereby the strap 178 maintains the connection between the towing vehicle 400 and the bike trailer 500 via the tow bar 200.

Turning to Figure 10, where a rear wheel hub of a towing vehicle 400 is shown with a first portion 102 of a towing vehicle connector 100 attached thereto. As is illustrated, the secondary safety arrangement 174 may further comprise a second securing element 118 configured to connect the first portion 102 to the towing vehicle 400. This provides additional safety and redundancy in case the attachment between the first portion 102 and the towing vehicle 400 in the fix point 150 fails.

The second securing element 118 may be formed by dual wires forming a loop 180 through which the entire first portion 102 is insertable thus allowing the loop 180 to be wound around a frame member 402 of the towing vehicle 400. To tighten the loop 180 around the frame member 402 and to make sure it stays in place, a tightening member 182 is provided through which the second securing element 118 extends. The tightening member 182, shown in Figure 11, comprises a spring biased push button 186 for altering the size of an opening 190 through the tightening member 182. The spring biased push button 186 being biased such that the second securing element 118 is pinched when no pressure is applied to the push button 186 whereby the tightening member 182 is held in place along the second securing element 118. The push button 186 is moveably arranged in a housing 188 through which the opening 190 is accessible.

Accordingly can the dual wires of the second securing element 118 be secured around a frame member 402 of the towing vehicle 400 in a simple and effective manner, reducing the risk of the second securing member 118 becoming entangled for instance in the wheel of the towing vehicle 400.

Providing a second securing element 118 having dual wires, preferably metal wires, not only facilitates attaching the second securing element 118 to the towing vehicle 400 as outlined above but further adds strength to the redundant connection between the first portion 102 and the towing vehicle 400 as dual wires can withstand higher forces and are less likely to break under load in case the connection between the first portion 102 and second portion 104 fails.

In the following will reference be made to Figures 12 to 14a where the second portion 104 and the first portion 102 is shown respectively.

The second portion 104 may be provided with at least two contact surfaces 152, 158, 160 for contacting the protrusion 174 when the protrusion 174 is arranged in the recess 138. Preferably are contact surfaces 152, 158, 160 provided preventing movement of the second portion 104 in relation to the first portion 102 in at least two movement directions parallel with the front surface 144 of the first portion 102. The contact surfaces 152, 158, 160 may be configured to prevent movement in each direction parallel with the front surface 144 except in along the disconnection path P1, particularly along the engagement component P3 thereof, in which direction the latch 122 prevents movement.

Side contact surfaces 152, 158 may be arranged protruding inside of a recess perimeter surface 156, such that the risk of the recess perimeter surface 156 contacting the side contact surfaces 162, 166 on the protrusion 174 is reduced.

Each contact surface 152, 158, 160 on the second portion 104 is configured be in contact with a corresponding side surface 162, 164, 166 on the protrusion 174. The contact surfaces 152, 158, 160 on the second portion 104 comprises contact sound reducing material properties, thus reducing contact noise that would risk forming between the protrusion 174 and the second portion 102 during use of the towing vehicle connector 100. It is further considered that alternatively or in combination, the side surfaces 162, 164, 166 on the protrusion 174 may also be provided contact sound reducing material properties. The contact sound reducing properties may be achieved by providing a coating having elastic properties, for instance a polymeric coating.

In an embodiment where the second portion 104 comprises a first member 154 and a second member 176 as described in the foregoing, the second member 176 may be provided with contact sound reducing material properties and the contact surfaces 152, 158, 160 formed in the second member 176. The second member 176 may be made from a glass fiber reinforced polyamide, having between 20% and 40% glass fiber, preferably approximately 30%. The first member 154 may manufactured from a metallic material such as aluminium, stainless steel or zinc. The recess 138 is formed in the first member 154 and the second member 176 is accessible through the recess 138 by the protrusion 174 when inserted into the recess 138 such that the protrusion 174 makes contact with the contact surfaces 152, 158, 160 on the second portion 104.

Figure 14b shows a first portion 102 of the towing vehicle connector 100 where the connection interface 120 is configured for connection/disconnection along a towing/travelling direction. Particularly, the protrusion 174 is arranged such that the length L thereof extends in the towing/travelling direction, whereby the engagement component P3 is arranged accordingly. As is illustrated in Figure 14c, the second portion 104 and the recess 138 is in such an embodiment are naturally correspondingly arranged with the recess 138. In the embodiment shown in Figure 14b and 14c, the connection interface 120 may be configured such that the connection component P3 is equal to or longer than the length L of the protrusion 174. As the wheel axle nut on the towing vehicle 400 is not limiting the movement of the second portion 104 in relation to the first portion 102, the second portion 104 can be slid onto the first portion 102 into the connected position. Accordingly, the recess 138 may be open ended towards one side of the second portion 104 as illustrated in Figure 14c.

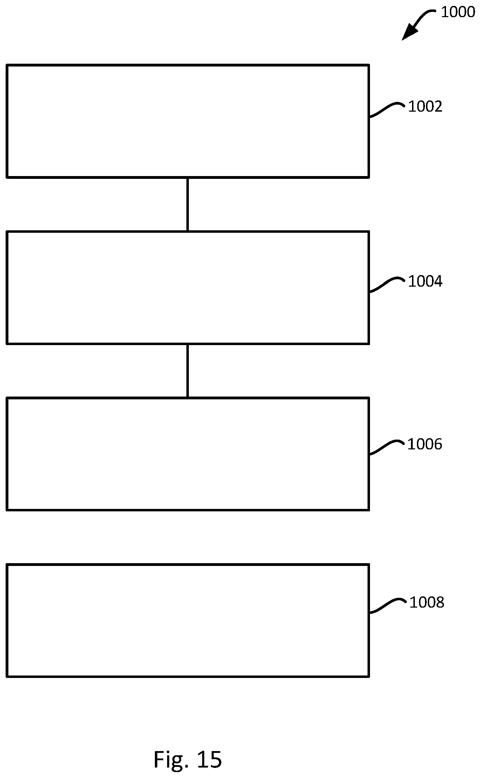

Figure 15 shows a schematic flowchart of a method 1000 for connecting a towbar 200 comprising a towing vehicle connector 100 to a towing vehicle 400. It is to be realized that a method for disconnection is also provided being performed in the opposite direction of the method for connecting 1000. The method 1000 comprises:
- providing 1002 a towing vehicle 400 having a first portion 102 arranged thereon,
- moving 1004 a second portion 104 of the towing vehicle connector 100 of the tow bar 200 in a connection path having an engagement component P3 thereof forming the portion of the connection path P2 closest to a connected position of the second portion 104 in relation to the first portion 102, the engagement component P3 being arranged at an angle between 60° and 120° in relation to a lateral towing vehicle direction D4 and/or to a protrusion direction D5 of a protrusion 174 of a connection interface 120 arranged between the first portion 102 and the second portion 104.

The method may further comprise the second portion 104 of the towing vehicle connector 100 automatically releasably connecting 1006 to the first portion 102 of the towing vehicle connector 100 when brought into the connected position in relation to the first portion 102. As described in the foregoing, a latch 122 may be provided being biased such that it engages with a latch recess 126 when the second portion 104 is in the connected position.

The moving 1004 of the second portion 104 to a connected position of the second portion 104 in relation to the first portion 102 may comprise moving the second portion to a connected position below a fix point 150 for fixating the first portion 102 to the vehicle 400.

The method 1000 may further comprise releasably attaching 1008 a securing element 168 to the first portion 102 when the second portion 104 is in the connected position in relation to the first portion 102. The securing element 168 provides redundancy in the connection between the first portion 102 and the second portion 104, reducing the risk of unintentional release of the connection.

Figures 16 and 17 shows a perspective view of a bike trailer connector 300 for connecting a tow bar 200 to a bike trailer 500. The bike trailer 500 being a multisport reconfigurable trailer that allows the tow bar 200 to be removed and attached to the bike trailer 500 as needed.

The tow bar has a first end 202 associated with the bike trailer 500 and a second end 204 associated with the towing vehicle 400. The bike trailer connector 300 is arranged on the first end 202 of the tow bar 200. The bike trailer connector 300 comprises a securing mechanism 302 for securing the tow bar 200 to the bike trailer 500, the securing mechanism 302 being configured to be automatically engaged when the tow bar 200 is arranged in an inserted position in a tow bar opening 502 of the bike trailer 500. By securing mechanism 302 automatically engaging, the tow bar 200 can simply be brought into the inserted position to secure it in relation to the bike trailer 500 without having to manipulate or actuate any button on the bike trailer connector 300. This makes it easier for a user to with one hand stabilize or hold the bike trailer 500 in place and with the other hand grip the tow bar 200 with any grip that is comfortable without having to consider the placement of a button or other locking means and simply insert the tow bar 200 in the tow bar opening 502 on the bike trailer 500.

Figures 18 and 19 show a perspective detail view of the bike trailer 500 and the bike trailer connector 300 from the left and from the right respectively. The bike trailer connector 300 comprises an insertion portion 308 protruding past the securing mechanism 302, the insertion portion 308 may be a part of the tow bar 200. The insertion portion 308 is configured to be inserted into the connection opening 502 on the bike trailer 500 and is thus provided with corresponding cross-sectional shapes. The insertion portion 308 provides lateral and vertical stability to the tow bar 200.

Further illustrated in Figures 18 and 19 is that the securing mechanism 302 comprises an inclined abutment surface 306a, 306b allowing a force generated by insertion of the tow bar 200 into the tow bar opening 502 to disengage the securing mechanism 302 until the tow bar 200 is in the inserted position in the tow bar opening 502 whereby the securing mechanism 302 automatically engages.

A first inclined abutment surface 306a is provided in the tow bar opening 502. The first inclined abutment surface 306 is inclined such that in an insertion direction D3, it is inclined towards the insertion portion 308. As such, a securing pin 304 of the securing mechanism 302 will make contact with the inclined abutment surface 306a which upon further insertion of the bike trailer connector 300 will gradually press the securing pin 304 into the insertion portion 308.

As an alternative or in combination with the first inclined abutment surface 306a may a second abutment surface 306b be provided. The second abutment surface 306b is arranged on the securing pin 304 and may be inclined such that such that in an insertion direction D3, it is inclined towards the insertion portion 308. Accordingly, when encountering the tow bar opening 502, the securing pin 304 will be pushed into the insertion portion 308.

Illustrated in Figure 18, the securing mechanism 302 may be provided with a release push button 310 associated with the securing pin 304, the push button 310 preferably being arranged on the bike trailer connector 300 such that it can be actuated by a thumb of the user. The securing pin 304 is actuatable by means of the release push button 310 to selectively release the tow bar 200 from the inserted position in the tow bar opening 502.

For instance, the release push button 310 may in one or several embodiments herein in which the tow bar 200 is attached to a lateral side of the bike trailer 500 be arranged on the side of the bike trailer connector 300 facing towards a center of the bike trailer 500. This enables, for the embodiment shown e.g. in Figure 18, a user to stand in the angular gap formed between the tow bar 200 and the bike trailer 500, with the left hand on the bike trailer 500 and the right hand gripping the bike trailer connector 300 whereby the thumb naturally is positioned on the release push button 310, which facilitates release of the bike trailer connector 300 from the bike trailer 500.

The bike trailer connector 300 further comprises a securing pin engagement opening 504, being arranged inside of the tow bar opening 502 on the bike trailer 500. The securing pin 504 is configured to engage and resiliently extend into the securing pin engagement opening 504 when the tow bar 200 is in the inserted position, thus securing the tow bar 200 in place during towing.

The bike trailer connector 300 may be provided with an insertion stop surface 322 being configured to only allow the tow bar 200 to reach the inserted position in one orientation of the tow bar 200 in relation to the bike trailer 500. The insertion stop surface 322 is arranged at an angle in relation to the insertion direction D3 of the tow bar 200, such that it can only be arranged flush against a stop surface 324 surrounding the tow bar opening 502 in one orientation. Accordingly, incorrect installation of the tow bar 200 is prevented, for instance ensuring that the tow bar 200 can only be installed on one lateral side of the bike trailer 500, preferably the right side of the bike trailer 500 when observed from the front as illustrated e.g. in Figures 16 to 19.

Additionally, the bike trailer connector 300 may be provided with a locking mechanism 312 configured to selectively prevent actuation of the securing mechanism 302 at least when the tow bar 200 is in the inserted position, preventing unauthorized removal of the tow bar 200.

The locking mechanism 312 of the bike trailer connector 300 is configured to allow insertion of the tow bar 200 to the inserted position into the tow bar opening 502 when the locking mechanism 312 is in a locked state, thus facilitating safe use of the bike trailer connector 300 for attaching the tow bar 200 to the bike trailer 500. The locking mechanism 312 thus only needs to be unlocked during the actual removal of the tow bar 200 from the bike trailer 500 whereafter it can be locked again, automatically or by the user, while still allowing the tow bar 200 to be inserted into the tow bar opening 502 in the locked state.

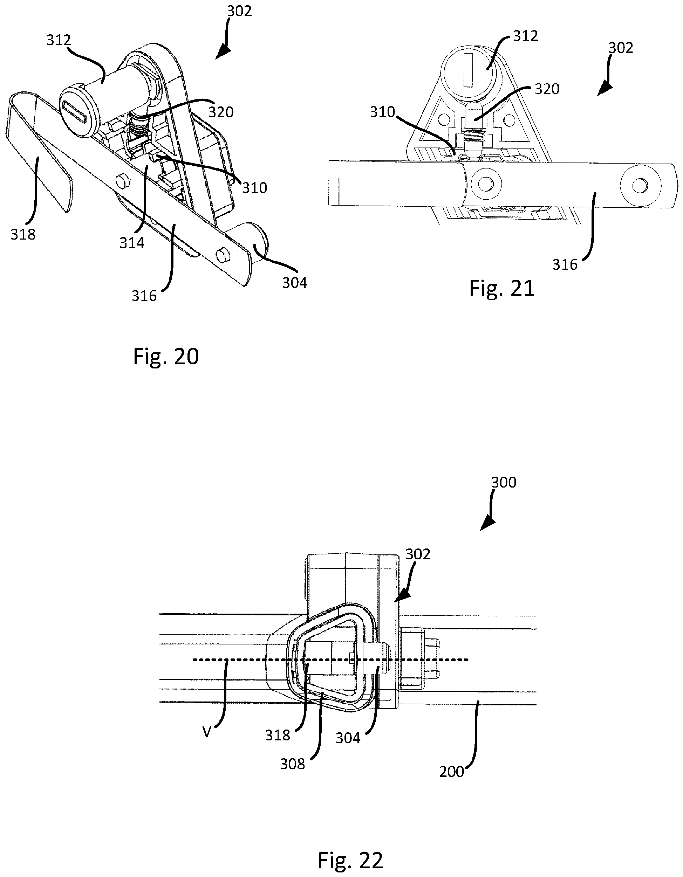

Figures 20 and 21 show a perspective and a side view of the securing mechanism 302 isolated from the tow bar 200 for clarity. As illustrated, the securing pin 304 may be arranged on an elongate element 316. The elongate element 316 being formed by a resilient material such as spring steel or another material having a high yield strength and resilience. The elongate element 316 is preferably V-shaped having a tongue 318 arranged in a pretensioned state against the inside of the tow bar 200 on the side opposite the securing pin 304. The elongate element 316 is thus biased into an extended position of the securing pin 304. The tow bar 200 preferably having a hollow shape such that a space is formed inside, in which the elongate element 316 can be arranged in a pretensioned state. The tow bar 200 preferably has a narrowing cross-sectional shape, shown in Figure 22, towards the side against which the tongue 318 is arranged, facilitating maintaining the correct orientation of the elongate element 316 as the tongue 318 is arranged against the narrow section of the tow bar 200 which does not permit large movements of tongue in the vertical direction and thus reduces the risk of the securing ping 304 becoming misaligned.

Further illustrated in Figure 20, the securing mechanism 302 may comprise a second pin 314 being operatively connected by the elongate element 316 to the securing pin 304 such that depression of the second pin 314 causes depression of the securing pin 304 and vice versa. The second pin 314 is preferably configured to be engaged by the release push button 310 such that when the release push button 310 is pushed, the force is transferred via the second pin 314 to the elongate element 316. It is to be realized that the release push button 310 may push directly against the elongate element 316.

Further illustrated in Figures 20 and 21, the locking mechanism 312 may be rotatably arranged in the bike trailer connector 300 and be configured to cooperate with a locking pin 320 which is reciprocally moveable and biased into an unlocked position. Figure 21 shows the locking mechanism 312 rotated such that the locking pin 320 is in the locked position. When in the locked position the locking pin 320 prevents depressing of the release push button 310, preventing release of the bike trailer connector 300. The locking pin 320 does not prevent movement of the securing pin 304 however, allowing the bike trailer connector 300 to be inserted into the tow bar opening 502 also when the locking mechanism 312 is locked.

Figure 22 shows the bike trailer connector 300 in a view in the travelling/towing direction facing towards the insertion portion 308. The insertion portion 308, which may be formed by the tow bar 200, may be provided with a non-symmetrical cross-sectional shape above and below a vertical center plane V, the cross-sectional shape corresponding to the tow bar opening 502. Accordingly, the insertion portion 308 can only be inserted on one side of the bike trailer 500.

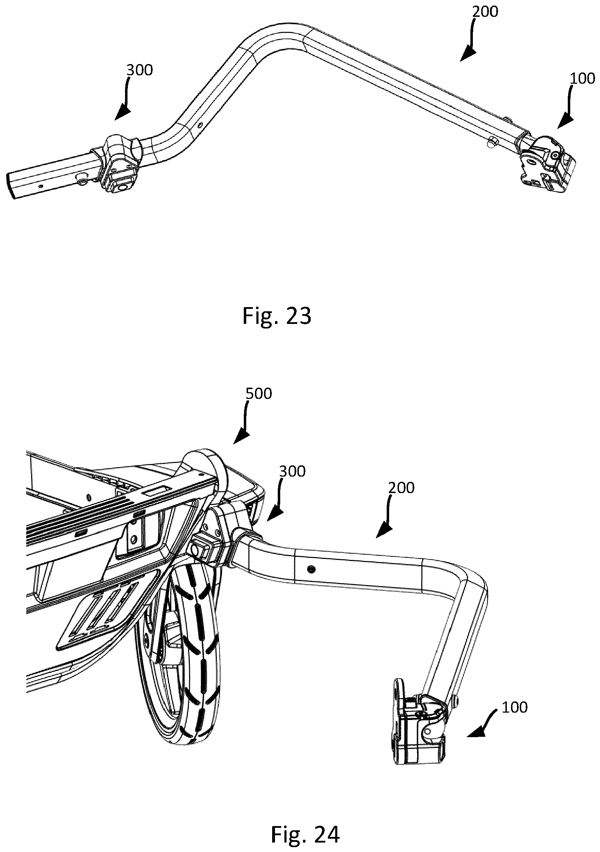

Figure 23 shows a tow bar 200 comprising a bike trailer connector 300 as disclosed herein and a towing vehicle connector 100 as disclosed herein.

Figure 24 shows a bike trailer 500 comprising a tow bar 200 comprising a bike trailer connector 300 as disclosed herein and a towing vehicle connector 100 as disclosed herein.

It is to be understood that the present invention is not limited to the embodiments described above and illustrated in the drawings; rather, the skilled person will recognize that many changes and modifications may be made within the scope of the appended claims.

### ITEMIZED LIST OF EMBODIMENTS:

Aspect A:
1. A towing vehicle connector (100) for connecting a tow bar (200) of a bike trailer (500) to a towing vehicle (400), the tow bar (200) having a first end (202) associated with the bike trailer (500) and a second associated with the towing vehicle (400), wherein the towing vehicle connector (100) is configured to be arranged between the second end (204) of the tow bar (200) and the towing vehicle (400), wherein the towing vehicle connector (100) comprises a first portion (102) being configured to be arranged in a fixed position in relation to the vehicle (400) and a second portion (104) configured to be arranged on the second end (204) of the tow bar (200) and releasably connected to the first portion (102), wherein the second portion (104) is configured to be rotatable in relation to the second end (204) of the tow bar (200) with at least two degrees of freedom.
2. The towing vehicle connector (100) according to item 1, wherein the towing vehicle connector (100) comprises at least one connection status indicator (108, 110) indicating when the first portion (102) and second portion (104) are connected.
3. The towing vehicle connector (100) according to item 2, wherein a first connection status indicator (108) comprises a reciprocally moveable element (112), the movement of the reciprocally moveable element (112) being controlled by the relative position of the first portion (102) and the second portion (104) such that the reciprocally moveable element (112) indicates when the second portion (104) is in a connected position in relation to the first portion (102).
4. The towing vehicle connector (100) according to item 2 or 3, wherein the towing vehicle connector (100) comprises a second connection status indicator (110), the second connection status indicator (110) comprising an alignment interface (114) which is configured to be aligned when the second portion (104) is in a connected position in relation to the first portion (102) and thus indicating when the first portion (102) and the second portion (104) are connected.
5. The towing vehicle connector (100) according to any one of the preceding items, wherein the towing vehicle connector (100) comprises a connection interface (120) between the first portion (102) and the second portion (104) and a latch (122) preventing movement of the second portion (104) in relation to the first portion (102) out of a connected position along a disconnection path (P1) when the first portion (102) is connected to the second portion (104), and wherein the connection interface (120) is configured to prevent movement of the second portion (104) in relation to the first portion (102) out of the connected position in all directions except along the disconnection path (P1).
6. The towing vehicle connector (100) according to item 5 when dependent on item 3, wherein the latch (122) is connected to the reciprocally moveable element (112).
7. The towing vehicle connector (100) according to item 5 or 6, further comprising a connection release (124) being configured to be actuatable to selectively release the latch (122) such that the latch (122) does not prevent movement of the second portion (104) out of the connected position along the disconnection path (P1).
8. The towing vehicle connector (100) according to item 7, wherein the connection release (124) is configured to upon actuation be moveable in a direction (D1) being arranged at an angle in relation to a movement direction (D2) of the latch (122) to selectively release the latch (122).
9. The towing vehicle connector (100) according to item 7 or 8, wherein the connection release (124) is configured to engage an abutment surface (146) associated with the latch (122) thus generating a force moving the latch (122) such that it is released.
10. The towing vehicle connector (100) according to any one of the preceding items, further comprising a securing element (168) configured to be releasably attached to the first portion (102) when the second portion (104) is connected to the first portion (102) and wherein the securing element (168) is configured to prevent movement of the second portion (104) in relation to the first portion (102) out of a connected position when releasably attached to the first portion (102).
11. The towing vehicle connector (100) according to item 10, wherein the securing element (168) forms part of a secondary safety arrangement (174) configured to connect the tow bar (200) to the first portion (102), the secondary safety arrangement (174) further comprising a second securing element (118) configured to connect the first portion (102) to the vehicle (400).
12. The towing vehicle connector (100) according to item 10 or 11 when dependent on item 4, wherein the securing element (168) is configured to be releasably attached to the alignment interface (114) when the second portion (104) is connected to the first portion (102) such that the securing element (168) by being releasably attached to the alignment interface (114) prevents the second portion (104) from moving out of the connected position in relation to the first portion (102).
13. The towing vehicle connector (100) according to any one of the preceding items, wherein the towing vehicle connector (100) further comprises a resilient element (208) at the second end (204) of the tow bar (200) and wherein the second portion (104) of the towing vehicle connector (100) is attached to the resilient element (208).
14. The towing vehicle connector (100) according to any one of the preceding items, wherein the second portion (104) is configured to be attached to the tow bar (200) by means of a ball joint.
15. The towing vehicle connector (100) according to any one of the preceding items, wherein the second portion (104) is configured to automatically be releasably connected to the first portion (102) when the second portion (104) is arranged in a connected position in relation to the first portion (102).
16. The towing vehicle connector (100) according to any one of the preceding items, wherein the second portion (104) is releasably connected to the first portion (102) along a connection path (P2) having an engagement component (P3) being arranged at an angle (a) in relation to a lateral direction (D4) of the towing vehicle such that the second portion (104) in a connected position is arranged below a fix point (150) for fixating the first portion (102) to the vehicle (400).
17. The towing vehicle connector (100) according to any one of the preceding items, wherein a connection interface (120) between the first portion (102) and the second portion (104) comprises a protrusion (174) and a corresponding recess (138) for mutual engagement with each other to releasably connect the second portion (104) to the first portion (102), wherein the connection interface (120) is configured such that the second portion (104) is releasably connected to the first portion (102) by a movement in relation to the first portion (102) along a connection path (P2) having a component (P3) being arranged at an angle (β) in relation to a protrusion direction (D5) of the protrusion (174).
18. The towing vehicle connector (100) according to item 17, wherein a distance between a connected position and a releasable position of the second portion (104) in relation to the first portion (102) is less than a length (L) of the protrusion (174).
19. The towing vehicle connector (100) according to item 17 or 18, wherein the protrusion (174) comprises a central portion (184) and wherein the protrusion (174) further comprises at least one protruding shoulder (128a, 130a, 132a) configured to cooperate with a respective corresponding protruding shoulder (128b, 130b, 132b) in the recess (138).
20. The towing vehicle connector (100) according to item 19, wherein the protrusion (174) comprises at least two protruding shoulders (128a, 130a, 132a) being distributed along a length (L) of the protrusion (174).
21. The towing vehicle connector (100) according to item 17, wherein the second portion (104) comprises at least two contact surfaces (152, 158, 160) for contacting the protrusion (174) and forming relative movement limitations for the second portion (104) in relation to the first portion (102) in at least two movement directions parallel with a front surface (144) of the first portion (102), wherein the at least two contact surfaces (152, 158, 160) comprises contact sound reducing material properties.
22. The towing vehicle connector (100) according to item 21 when dependent on item 17, wherein the second portion (104) comprises a first member (154) and a second member (176) being attached to one another, the first member (154) comprising the recess (138) and the second member (176) being accessible through the recess (154), wherein the second member (176) is provided with contact sound reducing material properties and wherein the at least two contact surfaces (152, 158, 160) are formed in the second member (176).

Aspect B:
23. A bike trailer connector (300) for connecting a tow bar (200) to a bike trailer (500), the tow bar (200) having a first end (202) associated with the bike trailer (500) and a second end (204) associated with the towing vehicle (400) and wherein the bike trailer connector (300) is arranged on the first end (202) of the tow bar (200), the bike trailer connector (300) comprising a securing mechanism (302) for securing the tow bar (200) to the bike trailer (500), wherein the securing mechanism (302) is configured to be automatically engaged when the tow bar (200) is arranged in an inserted position in a tow bar opening (502) of the bike trailer (500).
24. The bike trailer connector (300) according to item 23, wherein the securing mechanism (302) comprises an inclined abutment surface (306a, 306b) allowing a force generated by insertion of the tow bar (200) into the tow bar opening (502) to disengage the securing mechanism (302) until the tow bar (200) is in the inserted position in the tow bar opening (502) whereby the securing mechanism (302) automatically engages.
25. The bike trailer connector (300) according to item 23 or 24, wherein the securing mechanism (302) comprises a release push button (310) associated with a securing pin (304) for securing the tow bar (200) to the bike trailer (500), the securing pin (304) being actuatable by means of the push button (310) to selectively release the tow bar (200) from the inserted position in the tow bar opening (502).
26. The bike trailer connector (300) according to any one of items 23 to 25, wherein the securing mechanism (302) comprises a securing pin (304) and a second pin (314) being operatively connected by an elongate element (316) such that depression of the second pin (314) causes depression of the securing pin (304) and vice versa and wherein the elongate element (316) is biased into an extended position of the securing pin (304) and the second pin (314).
27. The bike trailer connector (300) according to any one of items 23 to 26, further comprising an insertion stop surface (322) being configured to only allow the tow bar (200) to reach the inserted position in one orientation of the tow bar (200) in relation to the bike trailer (500).
28. The bike trailer connector (300) according to item 27, wherein the insertion stop surface (322) is arranged at an angle in relation to an insertion direction (D3) of the tow bar (200).
29. The bike trailer connector (300) according to any one of items 23 to 28, further comprising a locking mechanism (312) configured to selectively prevent actuation of the securing mechanism (302) at least when the tow bar (200) is in the inserted position.
30. The bike trailer connector (300) according to item 29, wherein the locking mechanism (312) of the bike trailer connector (300) is configured to allow insertion of the tow bar (200) to the inserted position into the tow bar opening (502) when the locking mechanism (312) is in a locked state.
31. The bike trailer connector (300) according to item 29 when dependent on item 25, wherein the locking mechanism (312) is configured to selectively prevent depression of the push button (310) while not limiting the movement of the securing pin (304).

Aspect C:
32. A tow bar (200) for forming a force conveying element between a towing vehicle (400) and a bike trailer (500), the tow bar (200) comprising a first end (202) associated with the bike trailer (500) and a second end (204) associated with the towing vehicle (400), the tow bar (200) further comprising a towing vehicle connector (100) according to any one of items 1 to 22 arranged on the second end (204) and/or a bike trailer connector (300) according to any one of items 23 to 31 arranged on the first end (202).

Aspect D:
33. A bike trailer (500) comprising a tow bar (200) according to item 32.

Aspect E:
34. A method (1000) for connecting a towbar (200) comprising a towing vehicle connector (100) according to any one of items 1 to 22 to a towing vehicle (400), the method (1000) comprising:
   - providing (1002) a towing vehicle (400) having a first portion (102) arranged thereon,
   - moving (1004) a second portion (104) of the towing vehicle connector (100) of the tow bar (200) in a connection path (P2) having a engagement component (P3) thereof forming the portion of the connection path (P2) closest to a connected position of the second portion (104) in relation to the first portion (102), the engagement component (P3) being arranged at an angle between 60° and 120° in relation to a lateral towing vehicle direction (D4) and/or to a protrusion direction D5 of a protrusion 174 of a connection interface 120 arranged between the first portion 102 and the second portion 104.
35. The method according to item 34, further comprising the second portion (104) of the towing vehicle connector (100) automatically releasably connecting to the first portion (102) of the towing vehicle connector (100) when brought into a connected position in relation to the first portion (102).
36. The method according to item 34 or 35, further comprising moving the second portion (104) to a connected position of the second portion (104) in relation to the first portion (102) being arranged below a fix point (150) for fixating the first portion (102) to the vehicle (400).
37. The method according to any one of items 34 to 36, further comprising releasably attaching (1006) a securing element (168) to the first portion (102) when the second portion (104) is in the connected position in relation to the first portion (102).

## Claims

1. A towing vehicle connector (100) for connecting a tow bar (200) of a bike trailer (500) to a towing vehicle (400), the tow bar (200) having a first end (202) associated with the bike trailer (500) and wherein the towing vehicle connector (100) configured to be arranged between a second end (204) of the tow bar (200) opposite the first end (202) and the towing vehicle (400), wherein the towing vehicle connector (100) comprises a first portion (102) being configured to be arranged in a fixed position in relation to the vehicle (400) and a second portion (104) configured to be arranged on the second end (204) of the tow bar (200) and releasably connected to the first portion (102), wherein the second portion (104) is configured to be rotatable in relation to the second end (204) of the tow bar (200) with at least two degrees of freedom.

2. The towing vehicle connector (100) according to claim 1, wherein the towing vehicle connector (100) comprises at least one connection status indicator (108, 110) indicating when the first portion (102) and second portion (104) are connected.

3. The towing vehicle connector (100) according to claim 2, wherein a first connection status indicator (108) comprises a reciprocally moveable element (112), the movement of the reciprocally moveable element (112) being controlled by the relative position of the first portion (102) and the second portion (104) such that the reciprocally moveable element (112) indicates when the second portion (104) is in a connected position in relation to the first portion (102).

4. The towing vehicle connector (100) according to claim 2 or 3, wherein the towing vehicle connector (100) comprises a second connection status indicator (110), the second connection status indicator (110) comprising an alignment interface (114) which is configured to be aligned when the second portion (104) is connected to the first portion (102) and thus indicating when the first portion (102) and the second portion (104) are connected.

5. The towing vehicle connector (100) according to any one of the preceding claims, wherein the towing vehicle connector (100) comprises a connection interface (120) between the first portion (102) and the second portion (104) and a latch (122) preventing movement of the second portion (104) in relation to the first portion (102) out of a connected position along a disconnection path (P1) when the first portion (102) is connected to the second portion (104), and wherein the connection interface (120) is configured to prevent movement of the second portion (104) in relation to the first portion (102) out of the connected position in all directions except along the disconnection path (P1).

6. The towing vehicle connector (100) according to any one of the preceding claims, further comprising a securing element (168) configured to be releasably attached to the first portion (102) when the second portion (104) is connected to the first portion (102) and wherein the securing element (168) is configured to prevent movement of the second portion (104) in relation to the first portion (102) out of a connected position when releasably attached to the first portion (102).

7. The towing vehicle connector (100) according to claim 6, wherein the securing element (168) forms part of a secondary safety arrangement (174) configured to connect the tow bar (200) to the first portion (102), the secondary safety arrangement (174) further comprising a second securing element (118) configured to connect the first portion (102) to the vehicle (400).

8. The towing vehicle connector (100) according to any one of the preceding claims, wherein the second portion (104) is configured to be attached to the tow bar (200) by means of a ball joint.

9. The towing vehicle connector (100) according to any one of the preceding claims, wherein the second portion (104) is releasably connected to the first portion (102) along a connection path (P2) being arranged at an angle in relation to a lateral direction (D4) of the towing vehicle such that the second portion (104) in a connected position is arranged below a fix point (150) for fixating the first portion (102) to the vehicle (400).

10. The towing vehicle connector (100) according to any one of the preceding claims, wherein a connection interface (120) between the first portion (102) and the second portion (104) comprises a protrusion (174) and a corresponding recess (138) for mutual engagement with each other to releasably connect the second portion (104) to the first portion (102), wherein the connection interface (120) is configured such that the second portion (104) is releasably connected to the first portion (102) by a movement in relation to the first portion (102) along a connection path (P2) having a component being arranged at an angle (a) in relation to a protrusion direction of the protrusion.

11. The towing vehicle connector (100) according to claim 10, wherein a distance between a connected position and a releasable position of the second portion (104) in relation to the first portion (102) is less than a length (L) of the protrusion (174).

12. A bike trailer connector (300) for connecting a tow bar (200) to a bike trailer (500), the tow bar (200) having a first end (202) associated with the bike trailer (500) and a second end (204) associated with the towing vehicle (400) and wherein the bike trailer connector (300) is arranged on the first end of the tow bar (200), the bike trailer connector (300) comprising a securing mechanism for securing the tow bar to the bike trailer, wherein the securing mechanism (302) is configured to be automatically engaged when the tow bar (200) is arranged in an inserted position in a tow bar opening of the bike trailer (500).

13. The bike trailer connector (300) according to claim 12, wherein the securing mechanism comprises a release push button associated with a securing pin for securing the tow bar (200) to the bike trailer (500), the securing pin being actuatable by means of the push button to selectively release the tow bar (200) from the inserted position in the tow bar opening.

14. A tow bar (200) for forming a force conveying element between a towing vehicle (400) and a bike trailer (500), the tow bar (200) comprising a first end (202) associated with the bike trailer (500) and a second end (204) associated with the towing vehicle (400), the tow bar (200) further comprising a towing vehicle connector according to any one of claims 1 to 13 arranged on the second end (204) and/or a bike trailer connector (300) according to claim 12 or 13 arranged on the first end (202).

15. A bike trailer (500) comprising a tow bar (200) according to claim 14.
